# EUROPEAN PATENT SPECIFICATION

(11) **EP 0 569 425 B1**
(45) Date of publication and mention of the grant of the patent: **04.09.1996**
(21) Application number: 92903663.0
(22) Date of filing: 28.01.1992
(51) Int. Cl.: C02F 9/00, C02F 1/24, C02F 1/52

(54) **APPARATUS FOR CLEANING WATERS AND INDUSTRIAL SEWAGES CONTAINING FLOATING MATERIALS**
VORRICHTUNG ZUM REINIGEN SCHWIMMSTOFFHALTIGER INDUSTRIELLER ABWÄSSER
APPAREIL D'EPURATION DES EAUX USEES INDUSTRIELLES CONTENANT DES MATIERES FLOTTANTES

(30) Priority: 29.01.1991 HU 30691
(43) Date of publication of application: 18.11.1993
(73) Proprietor: AQUANETT KÖRNYEZETVEDELMI ES KERESKEDELMI KFT., H-1125 Budapest (HU)
(72) Inventor: CSIK S, Géza, H-1181 Budapest (HU); K BOR, Lidia, H-1212 Budapest (HU); LO "RINCZ, Péter, H-1125 Budapest (HU)
(74) Representative: Viering, Jentschura & Partner
(86) International application number: HU9200004
(87) International publication number: WO9212937

(56) References cited:
- AT-B- 380 861
- DE-A- 3 900 731
- FR-A- 2 564 453

## Description

### Field of the invention

Apparatus, for cleaning waters and/or industrial sewages containing floating materials and/or materials suitable for suspension, comprising collecting vessel, flotation vessel, foam collecting vessel, vessel for producing flotation medium, resp. foam- and water-bypipe.

### Prior Art

The known flotation methods and apparatuses for its realization solve the task by contacting and floating taken place by chemical coagulation-flocculation of the pollutions. The floated pollution then will be removed in the form of foam from the surface of the treated liquid.

The mentioned apparatuses are generally of circular, conical bottom, (radial flowing) or angular (longitudinal flowing) execution, in which the connected bubble-floccules, aggregates are directed upwards, while the speed-components of the cleaned water are directed downwards, result the separating resp. cleaning effect. In the case of the formation of the bubbles, their small dimension is very important.

Among the known solutions, the bubbling-method by the aid of introducing compressed gas is simple, and relatively energy-saving, however, owing to the great bubbles the cleaning effect is not satisfactory.

The liberation of gases coming from the electrolytic separation of the water is suitable for producing little bubbles, however, owing to its great energy-needs and the diminution of the electrodes it has not been spread widely in the practice.

According to the most advantageous solution, previously with air saturated water on overpressure is charged into the apparatus. Owing to the effect of the pressure-decrease, at this time, the great part of the dissolved air, separate in the form of a little bubbles. The disadvantage of the solution is the fact that fairly complicated service apparatuses are needed for producing the over-saturated water-flow. Such are as, the high-pressure pump, the pressure saturating tank, the safety and automatic controlling apparatuses.

In some cases opportunity occurs to leave the air compressor, if the surrounding air is mixed into the sucking conduit of the high-pressure pump, however, in this case the centrifugal pumps of radial flow utilized are suitable for delivering only a little bit air, and their efficiency considerably worsens.

It is similary disadvantageous to utilize the (one or two, in series connected) separate mixing tank applied for chemicals mixing-in and flocculation, then for forwarding the sewage in the pipe into the flotation apparatus. In this case considerable service-apparatus is needed, and in addition, the formed floccules have to be cut on the pipe.

In the apparatus described in the FR-PS 2.268.757, the floculation vessel being mixed mechanically takes place in the middle of the apparatus, but at the same time takes up for the most part of the efficient vessel (in the deepest part of the water vessel, in the fourth section of the diameter of the whole apparatus). The flocculated sewage from here with direction-change taken place more times in the narrow vessel between the roll shells, gets to the properly useful ring-shaped flotation vessel of less water-depth. In this apparatus, the dwelling period necessary to obtain the suitable effect in the flocculator takes 5-10 minutes according to the specification.

The aim of the invention is to eliminate the disadvantages described previously and to develop such an apparatus that enables to form the pollution floccules (particles) and microbubbles simultaneously as well as to result the separation from the cleaned water more efficient than that of the known solution. It is realized by such a guidance of the flow, which gradually increases the probability of contacting the pollution particles with the bubbles and by flexible following of the parameter variations it results optimal cleaning.

Guiding of three-phase (water-gas-particles) flow is realized by such a flowing velocity, being higher than the ascending velocity of the little bubbles participating in the flotation, but smaller than the ascending velocity of the great bubbles disturbing the flow of the flotation. So they get away upwards.

The task to be solved by the invention is to reduce the dwelling period of the sewage and to increase the efficiency of the cleaning.

The invention is based on the recognition that the aimed task is solved simply, if the water taken out of the cleaned water-phase is introduced on high-pressure by vaporizing into absorbing vessel filled with compressed air.

According to the methods described in the technical books, respectively to the patents known by us, the intake of the flotation air is taken place without exception in each case by dispergation. The starting point is the liquid and gas phase, and then by the aid of cutting the gas phase (making bubbles, mixing or applying together the previous ones) are effected the gas dispersion. The intensity of the air intake depends on the capillary size of the bubble system resp. on the intensity of the mixing. In both cases - of course also in the case of the combination of the two principles - auxiliary plant (capillary system, mixing) are requested.

In the sense of the invention the starting point is also the liquid and gas phase, but fog will be produced. The liquid by the aid of high-pressure pump is injected into the gas vessel being under pressure. The injected jet is separated into spontaneous drops, as the total surface area of the drops coming into being is less than the provisionally effected thin jet. The dimension of the so formed drops can fill out the whole microscopic and submicroscopic dimension range, i.e. fog-system having great specific surface is realized.

On the great specific surface the air molecules in accordance with the heat and pressure conditions, quickly, momentarily, and to a great extent are absorbed, so in the flowing fog-drops in equipartition large quantity of air can be binded.

As the efficiency of the dispergation depends on the surface tension and the viscosity of the liquid, namely, the less surface tension and the internal friction are, the greater dispersed fog (i.e. of greater specific surface) can be produced with the same energy supply. By using capillar active materials the work necessary for dispergation can be considerably decreased. The systems to be cleaned partly originally contain surface-active materials, partly it can be simply introduced.

The invention relates to an apparatus, for cleaning waters and/or industrial sewages containing floating materials and/or materials suitable for use in suspension, comprising collecting vessel, flotation vessel, foam collecting vessel, vessel for producing flotation medium, resp. foam- and water-bypipe.

The essential idea of the invention is in, that the collecting vessel comprises a mixing vessel and a focculating vessel, where the bottom of the expediently cylindrical focculating vessel is ring-shaped encircled by the mixing vessel, one end of the ring-shaped mixing vessel is closed, thereto the sewage inlet pipe and the chemicals inlet pipe are connected, while the other end of the mixing vessel towards the focculating vessel is open, thereto on the bottom, expediently in its middle, a pipe charging the flotation medium and chemicals is connected, the focculating vessel is encircled by the flotation vessel, then the air absorbing vessel encircles the flotation vessel, and to one of the inlets of this air absorbing vessel is joined a pipe for producing the flotation medium with water-fog vaporized with high-pressure, and for forwarding the compressed air; to the flotation vessel is connected a pipe for fowarding the flotation medium, while to the bottom of the flotation vessel is connected a further bypipe for the clean water-phase, one part of this through a high-pressure pump and a further pipe in an air absorbing vessel are led to the vaporizers arranged in the upper part of the air absorbing vessel and the flotation vessel and the air absorbing vessel are encircled by the foam collecting vessel, thereto the foam bypipe, the foam concentration control unit, and the water bypipe are connected.

It is a preferred embodiment of the invetion, in which a pipe for charging the sewage and a pipe charging the chemicals connect tangentially to the closed end of the mixing vessel and to the side wall of the ring-shaped mixing vessel mixing elements are fixed and the mixing elements are radially arranged and include angular with the radius.

It is a further development of the invention, in which the mixing elements at the place of the fixing are formed for reduced area and in case of need the mixing elements can be heated.

It is advantageous if the flocculation vessel is of changeable height and above the flocculation vessel in changeable height cone-shaped foam guiding plate towards the flocculation vessel is arranged and in a given case the foam guiding plate is rotatable as well, so the guidance of the foam can be realized more efficiently.

Further preferred embodiment is in, if in the flotation vessel, expediently in its lower third part, at least two rings provided with holes are arranged one above the other and the rings are joined through one of the valves to the pipe of high-pressure. It can be advantageous, if the rings are of various diameter, as in such a way the microbubbles flowing out of the ring form a filter layer in the whole vessel.

It is also advantageous if the diameter of the holes in the rings are increasing going away from the place of the joint to the pipe of high-pressure.

It is advantageous furthermore, if the rings are arranged perpendicularly to the shaft of the apparatus and the holes on the rings are arranged comparing to the height of the apparatus in changeable height, and comparing to each other in variable distance.

The advantage of the air absorber of the apparatus according to the invention is in, that the pressure of the compressed air is taken in the range of 4-4,5 bar, while in the pipe of the high-pressured water, the pressure is larger than previously, advantageously is of 6 - 7 bar, which is optimal for fogging.

Further advantageous embodiments are described by the features in claims 2 and 17.

The invention is described in detail with the aid of the enclosed drawing presenting the embodiments of the solution according to the invention by way of example, in which:
- Fig.1.: is a rough sketch reflecting the essential of the apparatus according to the invention;
- Fig.2.: shows the flocculating vessel with the mixing vessel;
- Fig.3a.: illustrates the mixing vessel in top view,
- Fig.3b.: shows the fixing of the guiding plate to the wall of the mixing vessel;
- Fig.4.: illustrates a more detailed embodiment of the apparatus according to the invention.

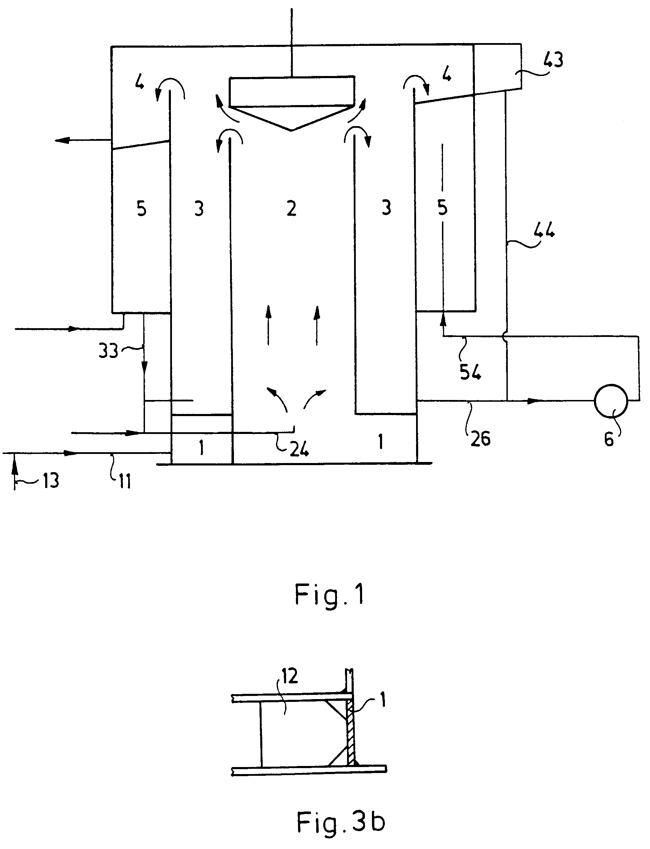

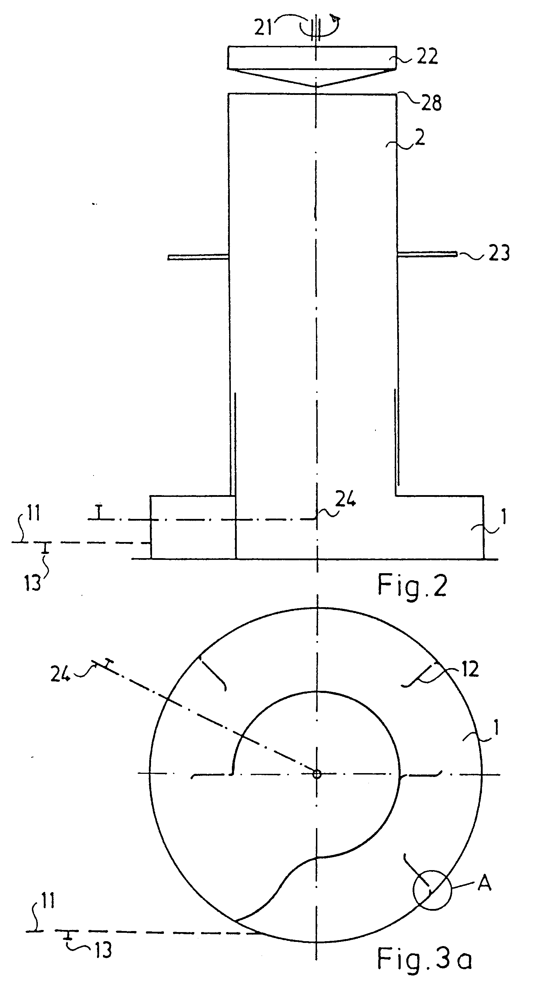

In Fig. 1 can be seen the rough sketch of the apparatus according to the invention, showing the essential of the invention. It can be well seen that the collecting vessel comprises a mixing vessel 1 and a flocculation vessel 2. The bottom of the cylindrical flocculation vessel 2 is encircled by the mixing vessel 1. To the flocculation vessel 2 on the bottom, expediently in its middle, a pipe 24 charging the flotation medium and chemicals is connected, while to the mixing vessel 1 is connected the pipe 13 for charging chemicals and the sewage inlet pipe 11. The flocculation vessel 2 is encircled by the flotation vessel 3. In the range above the flotation vessel 3 and the flocculation vessel 2 is arranged the foam guiding plate 22. Around the flotation vessel 3 can be found the air absorbing vessel 5, thereto compressed air is forwarded through the pipe 17. Similarly, to the air absorbing vessel 5 is connected one end of a high-pressure pipe 33 forwarding the flotation medium, the other end of which is joined to the floating vessel 3. At the bottom of the flotation vessel 3 a pipe 26 is coupled, which presses the water taken out of the clean water phase through the high-pressure pipe 54 through the high-pressure pump to the vaporizer 61 arranged in the air absorbing vessel 5. The other part of the water taken out of the clean water is guided to the foam concentration control unit 43 through the pipe 44. In Fig. 2 and 3. can be seen the little bit detailed drawing of the flocculation vessel 2 and the mixing vessel 1. To one of the ring-shaped closed end of the mixing vessel 1 is connected the chemicals inlet pipe 13 and the sewage inlet pipe 11. The other end of ring-shaped mixing vessel 1 is open and connects to the flocculation vessel 2. In the mixing vessel 1 mixing elements are arranged, and these mixing elements - as it can be seen in Fig. 3b - with reduced cross-section are joined to the wall of the mixing vessel 1.

Above the flocculation vessel 2 a foam guiding plate 22 is arranged, which foam guiding plate 22 in a given case can be of rotatable formation around the shaft 21 of the apparatus. The part of foam guiding plate 22 towards the flocculation vessel 2 is of cone-shaped formation. On the wall of the flocculation vessel 2 guiding element 23 can be seen, furthermore, in Fig. 2 can be also observed that the side wall of the flocculation vessel 2 is about in its third part of double wall, enabling on the one hand, to change the height of the flocculation vessel 2, on the other hand, the double wall connects to each other hermetically, to prevent the getting of the sewage into the flotation vessel 3 between the two walls. The height of the overflow edge 28 of the flocculation vessel 2 changes, if the height of the flocculation vessel 2 is changed. By this means, it can be set that optimal dwelling time and optimal foam flow should be realized.

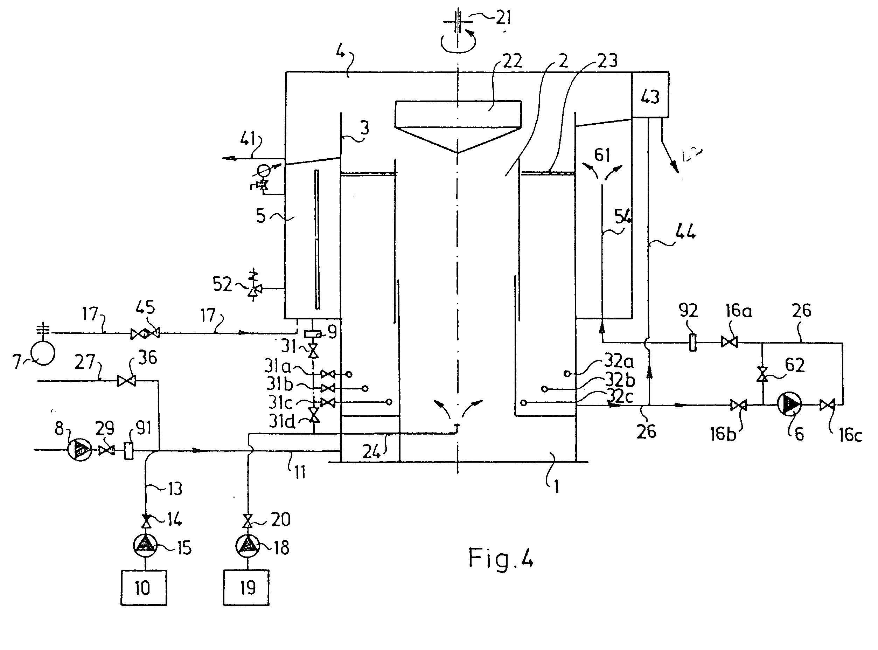

Fig. 4 represents a more detailed embodiment of the apparatus according to the invention, where in addition to the previously described facts, the pipe 33 realizing the connection between the flotation vessel 3 and the air absorbing vessel 5 can also be observed resp. the valves 31, 31a, 31b, 31c and 31d arranged in this pipe 33. The valves 31, 31a, 31b, 31c and 31d are connected to the rings 32a, 32b, 32c arranged in the lower part of the flotation vessel 3, and on the rings 32a, 32b, 32c further bores directing towards the inside of the flocculaton vessel 2 are formed. The diameter of the bores is chosen expediently so, that going away from the joint place being at the valves 31a, 31b, resp. 31c the diameter of the bores should increase in order that the flotation medium should get in equipartition into the inside of the flocculating vessel 2. In the figure 4. a compressor 7 can also be seen, from where compressed air is guided to the air absorbing vessel 5 through the pipe 17 with inserting the valve 45. In the circuit of the high-pressure pump 6 valves 16a, 16b, and 16c, resp. a valve 62 realizing a branching as well, and a liquid meter 92 are arranged. The pipe 24 through the valve 20, and through the pump 18 is connected to a tank 19, while to a tank 10 through a pump 15 and a valve 14 a pipe 11 charging the sewage is joined. To the pipe 13 charging the chemicals through the valve 36 a pipe 27 is connected, resp. through the valve 29 and through the sewage meter a pump 8 is joined.

The starting and operation of the apparatus acccording to the invention for cleaning the industrial sewages containing floating materials is as follows:

In the first step the valve 36 is opened, and the whole apparatus will be filled up with water through the pipe 27. Before starting operation, it is important to fill the apparatus with clean water in order that the operation should begin with clean water. If it did not take place so, then the floating pollutions being in the sewage would cause pipe choking, preventing the normal operation of the apparatus.

In the next step the compressor 7 will be switched on, which through the pipe 17 and the valve 45 - which is a shut-off and clack valve - connects to the high-pressure air absorbing vessel 5. After opening the compressor 7 in the high-pressure air absorbing vessel 5 a pressure set to the value of 3 bar comes into being.

The high-pressure air absorbing vessel 5 is provided with a liquid-level meter and a safety valve 52. By using them the operating parameters can be controlled all the times during operation, namely the operation pressure being in the high-pressure air absorbing vessel 5 and the liquid level during operation can be controlled. If owing to some unforeseeable reason, the air pressure being in the high-pressure air absorbing vessel 5 would rise above the limit value set, the safety valve 52 begins to work immediately and prevents that the apparatus should suffer a loss.

In the next step, the high-pressure pump 6 will start, which joins through the pipe 26 and the valve 16b to the bottom of the flotation vessel 3. The high-pressure pump 6 forwards the water on high pressure through the valve 16c and 16a, resp. through the liquid-meter 92 into the high-pressure pipe 54, from where, then the liquid get through the vaporizer 61 into the high-pressure air absorbing vessel 5. The producing of the flotation medium is taken place by the high-pressure vaporized water fog.

Owing to this, in the high-pressure air absorbing vessel 5 the value of the pressure from the previous base-value of 3 bar with suitable regulation, rises by the value of 4,5-5 bar. The task of the valve 62 joined to the pipe 26 is in that in the high-pressure air absorbing vessel 5 the pressure with the value of 4,5-5 bar necessary for the efficient operation of the apparatus should be set without overloading the high-pressure pump 6. This valve 62 ensures bypass for the water quantity, if it roses above the optimal value.

In the fourth step the operation of the flotation vessel 3 is started. Here in the first step the valve 31 is opened, which from the high-pressure air absorbing vessel 5 through the pipe 33, resp. through the ring 32a arranged in the flotation vessel 3 with high-pressure air saturated flotation medium forwards into the flotation vessel 3. The ring 32a in the flotation vessel 3 is arranged closely to the wall and guides the water into the flotation vessel 3 through the bores of small diameter in the wall. The bores are arranged so that their height is alternating, and considering the horizontal bores, the bore being next to it inclines an angle of 45° with it, and so out of the bores the flotation medium guides also towards the bottom of the flotation vessel 3. Owing to this, in the whole cross-section of the flotation vessel 3 little bubbles are forming in large thickness, which flow with increasing velocity to the surface of the liquid can be found in the flotation vessel 3. It results that in the whole cross-section of the flotation vessel 3 a filter layer comprising microbubbles will be formed.

The rings 32a, 32b, 32c should have different diameter and its bores can be arranged so that the fog coming into being should form in practice a whole filter layer.

In the fourth step, the valve 31d is opened enabling the flotation medium to flow into the flocculation vessel 2 through the pipe 24. At the same time the pump 18 is switched on and the valve 20 is opened, as a consequence, from the tank 19 through the pump 18 and the valve 20 with the aid of the pipe 24 flotation chemicals are charged into the flocculation vessel 2, by means the flotation operation is starting. After the mentioned previous arrangements, can follow the setting up of the normal sewage cleaning.

In the fifth step the pump 15 is started, the valve 14 is opened and through the pipe 13 charging the chemicals, flocculating chemicals are added to the mixing vessel 1, after having closed the flow of the clean water by the valve 36. After this, the sewage containing floating materials can be set up, by starting the operation of the pump 8 as well as by opening the valve 29. Through the sewage meter 91 and through the pipe 11 charging the sewage, the sewage flows tangentially into the mixing vessel 1. It can be well seen in Figure 3. Previous to the cleaning process, the parameters of the sewage to be cleaned has to be known, in order to set up properly the regulating elements.

The height of the overflow edge 28 of the flocculating vessel 2 can be set so that the dwelling period of the sewage in the flocculation vessel 2 should be very short, expediently, less than 45 sec. The dwelling period can be increased or decreased depending on the height of the overflow edge 28. In every case it has to be set in accordance with the requirement of the parameters of the given sewage.

The flowing cross-section of the flocculation vessel 2 can be set up by changing the height of the foam guiding plate 22, this enables the flowing cross-section to be fitted the parameter of the sewage to be cleaned. The construction of the mixing vessel 1 ensures intensive mixing between the sewage and the charged flocculation chemicals.

The processes taking place in the mixing vessel 1, can be influenced on one hand, with choosing the material of the flocculation chemicals, on the other hand, by the aid of determining the quantity of the periodically charged chemicals, resp. the quantity of the periodically charged sewage. The arrangement according to the invention can be seen in Figure 3, namely, the mixing vessel 1 encircles in ring-shaped the flocculation vessel 2, and one end of the mixing vessel 1 is closed, whereto the pipe 11 for charging the sewage, and the pipe 13 charging the flocculating chemicals are connected, enabling the suitable charging. The material of the flocculating chemicals and the quantity charged periodically in accordance with the parameters of the water have to be chosen. This chemical can be ingredient serving for example, for setting up the pH-value, resp. it can be polyelectrolyt.

To the outside and inside wall mixing elements 12 are alternately fixed. The distance between the mixing elements 12 in the direction of the flow are increasing, and the cross section of the mixing elements 12 - as earlier already mentioned - are decreased where they are fixed to the wall. The latter prevents the settling down the pollution behind the mixing elements 12. The flowing velocity of the sewage in the mixing vessel 1 will decrease due to the resistance of the mixing elements 12, by that means, the efficiency of the mixing is increasing. In the mixing vessel 1 itself there is not any moving part.

At forming the mixing elements 12 being in the mixing vessel 1, it has been taken into consideration, that in case of some sewages - for example in case of vegetable oil - the fat, oil being in the sewage, can precipitate at below working temperature, and cause therefore operating difficulties. To avoid the mentioned difficulties, the mixing elements 12 can be heated in a given case, so the mixing and the heating can be realized inside one unit. In the case of the apparatus according to the invention at request, - in case of some sewages - the flotation can be taken place by the aid of steam-feeding.

The heating of the mixing elements 12 can be realized by observing the operating-technical possibilities, it can be heated by steam, by hot water, resp. by electrical circuit.

The homogenized, necesserily malleablized sewage-chemical mixture being in the mixing vessel 1, from this mixing vessel 1 towards the shaft 21 flows vertically upwards into the flocculating vessel 2. The charging of the flocculating chemicals is taken place through the pipe 24 into the bottom of the flocculating vessel 2 expediently in its middle. The material of the flocculating chemicals and its quantity charged in a period have to be determined by taking into consideration of the parameters of the pollution materials. To the pipe 24 through the valve 31d a pipe 33 forwarding the flotation medium is connected.

The quantity of the flotation medium charged through the valve 31d can be regulated. So, the valve 31d ensures further regulating possibility. As a consequence, the process of the flocculation is increasing as well as increases the probability of the contact between the air bubbles and the floating pollutions. The air bubbles conduct the floating pollutions into the upper part of the flocculation vessel 2 gathering on the surface of the liquid in the form of bubbles.

The foam guiding plate 22 ensures the foam gathering as well, by the aid of its increase or decrease, the flowing cross-section can be changed between the overflow edge 28 and the foam guiding plate 22. By means of formation of the mixing vessel 1 and the flocculation vessel 2, the sewage-chemicals mixing will be optimal, so the dwelling period in the flocculation vessel 2 considering the known apparatus, decreases involving the decrease of the size of the apparatus. Then, the water, flowing on the overflow edge 28, primarily cleaned, however still containing floating particles gets to the flotation vessel 3. The flotation medium forwarded through the pipe 33, on three valves 31a, 31b, and 31c are connected to each tubular rings 32a, 32b, 32c. Through the bores the pressure of the high-pressured homogeneous solution saturated with air in the flotation vessel 3 suddenly decreases and as a consequence, a micro-bubble layer with great lift force are formed.

The height of the rings 32a, 32b, 32c arranged in the flotation vessel 3, resp. the number of the rings 32a, 32b, 32c working simultaneously, by means of opening or closing the valve 31a, 31b, 31c can be changed, and this change ensure further possibilities for the optimal setting up of the parameters of the apparatus. The rings 32a, 32b, 32c, resp. the valves 31a, 31b, 31c joined thereto ensure the probability that in case of any change taking place in the quality of the sewage, the contact between the pollution particles and the bubbles could be increased.

As it has been referred previously, it is not necessary that the diameter of the rings 32a, 32b, 32c should be the same, neither the number of the bores on it nor that of the size. It is expedient, however, to increase the diameter of the bores going away from the place of charging the liquid, in order to get the liquid here in equipartition flowing into the flocculation vessel 2.

The high-pressure air absorbing vessel 5, which encircles the flotation vessel 3, which is arranged either in one unit or separate unit, produces the high-pressure flotation medium. It is taken place so that into the high-pressured air absorbing vessel 5 through the pipe 17 and valve 45 compressed air is guided from the compressor 7.

The advantage of the air absorber of the apparatus according to the invention is in, that the pressure of the compressed air is taken in the range of 4-4,5 bar, while the pressure in the high-pressured water pipe is greater, advantageously with the value of 6-7 bar, which is optimal for making a fog.

The water fog guided in the high-pressure air absorbing vessel 5 contacts on large surface with the air, so the air guidance will be optimal resulting gasliosol of great dispersion. Owing to this fact, homogeneous solution, i.e. flotation medium takes place. The flotation medium guided through the pipe 33, the valve 31, 31a, 31b, 31c, resp. the ring 32a, 32b, 32c at the pressure of 5 bar suddenly decreases due to the atmospherical pressure and so, the microbubble layer contacts with the flocculating particles flowing upwards in the flocculating vessel 2. On the top of the flotation vessel 3 the thickness of the foam layer in such a way gradually increases.

The developing foam layer as a result of the optimal setting in the foam guiding plate 22 and the overflow edge 28 of the flocculation vessel 2, gets firstly to the foam collecting vessel 4, then to the foam bypipe 41 and after that goes away from the apparatus.

In order to ensure the optimal conditions of the operation of the apparatus, more measuring devices are built in the apparatus. Such as for example the sewage meter 91 and the liquid meter 92.

In the pipe 33 also can be arranged a volume measuring device 9 for measuring the flotation medium. The latter in a given case, can have an important role in improving the optimalization.

The simple embodiment of the apparatus according to the invention is suitable for removing the printer's ink coming into being on the course of regeneration of old-paper. By means of this method, in accordance with the type of the old-paper (black-white, colour-printed resp. painted and printed papers) according to the developed formula treated paper-squash is guided through the sewage inlet pipe 11 into the mixing vessel 1. Flowing through the flocculation vessel 2 it gets to the flotation vessel 3. In the high-pressure air absorbing vessel 5 there is only air, i.e. the pump 6 and the valves 16a, 16b, are closed. On the rings 32a, 32b, 32c in such a way only the high-pressure air is flown in counterflow against the paper-squash coming from above into the flotation vessel 3. To the surface of the so produced bubbles of great dimension adheres the colouring agent flaking off the paper-squash and gets to the foam collector 4 of the apparatus than goes away through the pipe 41. The cleaned fibrous water through the pipe 44 resp. the pipe 42 leaves the apparatus.

Summerizing the advantages of the apparatus according to the invention are as follows:

The parameter changes of the sewages to be cleaned can be flexible followed by the apparatus.

Both in the formation of mobil, with the efficiency of 10 m³ per hour, and with stabil formation with the efficiency of greater than 10 m³/hour the apparatus ensures optimal water cleaning.

The apparatus contains no moving part during operation.

The dwelling period of the sewage in the apparatus is much more less than in case of the known apparatuses.

The formation of the apparatus enables the changes of the flotation medium in the vessel and in the quantity, by this means, the probability of contactig the pollution particles with the little bubbles considerably increases, spreads all over the whole vessel, preventing the precipitating of the pollution particles .

The water fog guided into the high-pressure vaporizers 61 contacts on a large surface with the air, realizing an optimal air guidance, which results a gasliosol of great dispersion, at the same time forms homogeneous air-water solution.

The pressure of the homogeneous solution saturated with air, at leading back, decreases suddenly, as a consequence microbubbles with great lift force, and microbubble layer form.

The dwelling period of the sewage in the apparatus can be changeable, so the optimal dwelling period can be set simply.

The structural formation of the apparatus is very advantageous due to its smaller outer size.

Owing to the structural formation of the apparatus according to the invention, it is suitable for performing other technological operations with a simple intervention, for example, for cleaning industrial sewages, raw waters or in case of utilizing old-papers for removing the printer's ink.

The handling of the apparatus is simple, works safely, its maintenance and working costs are low.

Its efficiency considering the floating materials in the base formation, is better than 98 %, its efficiency for KOI is among 50-80 %.

## Claims

1. Apparatus, for cleaning waters and/or industrial sewages containing floating materials and/or materials suitable for forming suspension, comprising collecting vessel, flotation vessel, foam collecting vessel, vessel for producing flotation medium, resp. foam- and water-bypipe, **characterized in that** the collecting vessel comprises a mixing vessel (1) and a focculating vessel (2), where the bottom of the expediently cylindrical focculating vessel (2) is ring-shaped encircled by the mixing vessel (1), one end of the ring-shaped mixing vessel (1) is closed, thereto the sewage inlet pipe (11) and the chemicals inlet pipe (13) are connected, while the other end of the mixing vessel (1) towards the focculating vessel (2) is open, thereto on the bottom, expediently in its middle, a pipe (24) charging the flotation medium and chemicals is connected, the focculating vessel (2) is encircled by the flotation vessel (3), then the air absorbing vessel (5) encircles the flotation vessel (3), and to one of the inlets of this air absorbing vessel (5) is joined a pipe (17) for producing the flotation medium with water-fog vaporized with high-pressure, and for forwarding the compressed air; to the flotation vessel (3) is connected a pipe (33) for forwarding the flotation medium, while to the bottom of the flotation vessel (3) is connected a further bypipe (26) for the clean water-phase, one part of this through a high-pressure pump (6) and a further pipe (54) in an air absorbing vessel (5) are led to the vaporizers (61) arranged in the upper part of the air absorbing vessel (5) and the flotation vessel (3) and the air absorbing vessel (5) are encircled by the foam collecting vessel (4), thereto the foam bypipe (41), the foam concentration control unit (43), and the water bypipe are connected.

2. Apparatus for removing printer's ink advantageously from paper, comprising collecting vessel, flotation vessel, foam collecting vessel, vessel with compressed air, resp. foam- and water-bypipe, **characterized in that** the collecting vessel comprises a mixing vessel (1) and a focculating vessel (2), where the bottom of the expediently cylindrical focculating vessel (2) is in ring-shape encircled by the mixing vessel (1), one end of the ring-shaped mixing vessel (1) is closed, thereto the sewage inlet pipe (11) and the chemicals inlet pipe (13) are connected, while the other end of the mixing vessel (1) towards the focculating vessel (2) is open, while round the flotation vessel (3) the air absorbing vessel (5) is arranged, to this air absorbing vessel (5) is connected a pipe (17) forwarding the compressed air, one end of the pipe (33) for forwarding the flotation medium to the flotation vessel (3) joins also to the air absorbing vessel (5), while its other end connects to the flotation vessel (3), round the flotation vessel (3) a foam collecting vessel (4) is formed, thereto the foam bypipe (41), the foam concentration control unit (43), and the water bypipe are connected.

3. Apparatus according to the Claims 1 or 2, **characterized in that** a pipe (11) for charging the sewage and a pipe (13) charging the chemicals connect tangentially to the closed end of the mixing vessel (1) and to the side wall of the ring-shaped mixing vessel (1) mixing elements (12) are fixed.

4. Apparatus according to the Claim 3, **characterized in that** the mixing elements (12) are radially arranged.

5. Apparatus according to the Claim 3, **characterized in that** the mixing elements (12) include angular with the radius.

6. Apparatus according to the Claim 3, **characterized in that** the mixing elements (12) at the point of the fixing are formed with reduced cross section.

7. Apparatus according to the Claim 3, **characterized in that** the mixing elements (12) can be heated.

8. Apparatus according to any of the Claims 1 to 7, **characterized in that** height of the flocculation vessel (2) can be varied.

9. Apparatus according to any of the Claims 1 to 8, **characterized in that** above the flocculation vessel (2) in changeable height cone-shaped foam guiding plate (22) towards the flocculation vessel (2) is arranged.

10. Apparatus according to the Claim 9, **characterized in that** the foam guiding plate (22) is rotatable.

11. Apparatus according to any of the Claims 1 to 10, **characterized in that** in the flotation vessel (3), expediently in its lower third part, at least two rings (32a, 32b) provided with bores are arranged one above the other and the rings (32a, 32b) are joined through one of the valves (31a, 31b) to the pipe (33) of high-pressure.

12. Apparatus according to the Claim 11, **characterized in that** the rings (32a, 32b, 32c) are of various diameter.

13. Apparatus according to the Claim 11, **characterized in that** the rings (32a, 32b, 32c) are of the same diameter.

14. Apparatus according to any of the Claims 1 to 13, **characterized in that** the diameter of the bores in the rings (32a, 32b, 32c) are increasing going away from the point of the joint to the high-pressure pipe (33) of.

15. Apparatus according to any of the Claims 1 to 14, **characterized in that** the rings (32a, 32b, 32c) are arranged perpendicularly to the shaft (21) of the apparatus.

16. Apparatus according to any of the Claims 1 to 15, **characterized in that** the bores on the rings (32a, 32b, 32c) are arranged comparing to the height of the apparatus in variable height, and comparing to each other in variable distance.

17. Apparatus according to any of the Claims 1 to 16, **characterized in that** in the whole diameter of the flotation vessel micro-bubble layer is formed.

## Patentansprüche

1. Vorrichtung zum Reinigen von Gewässern und/oder industriellen Abwässern, die schwimmende Materialien und/oder zum Bilden einer Suspension fähige Materialien enthalten, wobei die Vorrichtung einen Sammelbehälter, einen Flotationsbehälter, einen Schaumsammelbehälter, einen Behälter zum Herstellen des Flotationsmediums bzw. Schaum- und Wasser-Bypassrohre aufweist, dadurch gekennzeichnet, daß der Sammelbehälter einen Mischbehälter (1) und einen Ausflockungsbehälter (2) aufweist, wobei der Boden des zweckmäßigerweise zylindrischen Ausflockungsbehälters (2) ringförmig von dem Mischbehälter (1) umgeben ist, eine Seite des ringförmigen Mischbehälters (1) geschlossen ist, an diesen das Abwassereinlaßrohr (11) und das Chemikalieneinlaßrohr (13) angeschlossen sind, wohingegen die andere Seite des Mischbehälters (1) in Richtung zu dem Ausflockungsbehälter (2) offen ist, an den am Boden, zweckmäßigerweise in seiner Mitte, ein Rohr (24) angeschlossen ist, das das Flotationsmedium und Chemikalien zuführt, der Ausflockungsbehälter (2) von dem Flotationsbehälter (3) umgeben ist, dann der Luftabsorptionsbehälter (5) den Flotationsbehälter (3) umgibt und an einen der Einlässe des Luftabsorptionsbehälters (5) ein Rohr (17) zum Herstellen des Flotationsmediums mit unter Hochdruck zerstäubtem Wassernebel und zum Fördern der Preßluft angeschlossen ist; an den Flotationsbehälter (3) ein Rohr (33) zum Fördern des Flotationsmediums angeschlossen ist, wohingegen an den Boden des Flotationsbehälters (3) ein weiteres Nebenrohr (26) für die Reinwasserphase angeschlossen ist, deren einer Teil über eine Hochdruckpumpe (6) und ein zusätzliches Rohr (54) in einem Luftabsorptionsbehälter (5) an den Verdampfer (61) geführt ist, der in dem oberen Teil des Luftabsorptionsbehälters (5) angeordnet ist und der Flotationsbehälter (3) und der Luftabsorptionsbehälter (5) sind von dem Schaumsammelbehälter (4) umgeben, an den das Schaumentlastungsrohr (41), die Schaumkonzentrationskontrolleinheit (43) und das Wasserentlastungsrohr angeschlossen sind.

2. Vorrichtung zum Entfernen von Druckertinte, vorzugsweise von Papier, die einen Sammelbehälter, einen Flotationsbehälter, einen Schaumsammelbehälter, einen Behälter mit Preßluft, bzw. Schaum- und Wasserentlastungsrohre aufweist, dadurch gekennzeichnet, daß der Sammelbehälter einen Mischbehälter (1) und einen Ausflockungsbehälter (2) aufweist, wobei der Boden des zweckmäßigerweise zylindrischen Ausflockungsbehälters (2) ringförmig von dem Mischbehälter (1) umgeben ist, eine Seite des ringförmigen Mischbehälters (1) geschlossen ist, daran das Abwassereinlaßrohr (11) und das Chemikalieneinlaßrohr (13) angeschlossen sind, wohingegen die andere Seite des Mischbehälters (1) in Richtung zum Ausflockungsbehälter (2) hin offen ist, wobei um den Flotationsbehälter (3) der Luftabsorptionsbehälter (5) angeordnet ist, an diesen Luftabsorptionsbehälter (5) ein Rohr (17) angeschlossen ist, das die Preßluft fördert, ein Ende des Rohrs (33) zum Fördern des Flotationsmediums zu dem Flotationsbehälter (3) auch in den Luftabsorptionsbehälter (5) mündet, wohingegen sein anderes Ende an den Flotationsbehälter (3) angeschlossen ist, um den Flotationsbehälter (3) ein Schaumsammelbehälter (4) ausgebildet ist, an den das Schaumentlastungsrohr (41), die Schaumkonzentrationskontrolleinheit (43) und das Wasserentlastungsrohr angeschlossen sind.

3. Vorrichtung gemäß einem der Ansprüche 1 oder 2, dadurch gekennzeichnet, daß ein Abwassereinlaßrohr (11) und ein Chemikalieneinlaßrohr (13) tangential an die geschlossene Seite des Mischbehälters (1) angeschlossen sind und an der Seitenwand des ringförmigen Mischbehälters (1) Mischelemente (12) befestigt sind.

4. Vorrichtung gemäß Anspruch 3, dadurch gekennzeichnet, daß die Mischelemente (12) radial angeordnet sind.

5. Vorrichtung gemäß Anspruch 3, dadurch gekennzeichnet, daß die Mischelemente (12) mit dem Radius einen Winkel einschließen.

6. Vorrichtung nach Anspruch 3, dadurch gekennzeichnet, daß die Mischelemente (12) an der Befestigungsstelle mit vermindertem Querschnitt ausgebildet sind.

7. Vorrichtung nach Anspruch 3, dadurch gekennzeichnet, daß die Mischelemente (12) erhitzbar sind.

8. Vorrichtung nach einem der Ansprüche 1 bis 7, dadurch gekennzeichnet, daß die Höhe des Ausflockungsbehälters (2) variierbar ist.

9. Vorrichtung nach einem der Ansprüche 1 bis 8, dadurch gekennzeichnet, daß oberhalb des Ausflockungsbehälters (2) in variierbarer Höhe ein kegelförmiges Blech (22) zum Leiten des Schaums zu dem Ausflockungsbehälter (2) hin angeordnet ist.

10. Vorrichtung nach Anspruch 9, dadurch gekennzeichnet, daß das Blech zum Leiten des Schaums (22) drehbar ist.

11. Vorrichtung nach einem der Ansprüche 1 bis 10, dadurch gekennzeichnet, daß in dem Flotationsbehälter (3), zweckmäßigerweise in seinem unteren Drittel, mindestens zwei Ringleitungen (32a, 32b), die mit Bohrungen versehen sind, eine über der anderen angeordnet sind und die Ringleitungen (32a, 32b) über eines der Ventile (31a, 31b) an das Hochdruckrohr (33) angeschlossen sind.

12. Vorrichtung nach Anspruch 11, dadurch gekennzeichnet, daß die Ringleitungen (32a, 32b, 32c) unterschiedliche Durchmesser aufweisen.

13. Vorrichtung nach Anspruch 11, dadurch gekennzeichnet, daß die Ringleitungen (32a, 32b, 32c) den gleichen Durchmesser aufweisen.

14. Vorrichtung nach einem der Ansprüche 1 bis 13, dadurch gekennzeichnet, daß der Durchmesser der Bohrungen in den Ringleitungen (32a, 32b, 32c) in Richtung weg von dem Verbindungspunkt mit dem Hochdruckrohr (33) zunimmt.

15. Vorrichtung nach einem der Ansprüche 1 bis 14, dadurch gekennzeichnet, daß die Ringleitungen (32a, 32b, 32c) senkrecht zu der Welle (21) der Vorrichtung angeordnet sind.

16. Vorrichtung nach einem der Ansprüche 1 bis 15, dadurch gekennzeichnet, daß die Bohrungen auf den Ringleitungen (32a, 32b, 32c) gegenüber der Höhe der Vorrichtung in unterschiedlicher Höhe angeordnet sind und untereinander in unterschiedlichen Abständen.

17. Vorrichtung nach einem der Ansprüche 1 bis 16, dadurch gekennzeichnet, daß über den gesamten Durchmesser des Flotationsbehälters eine Schicht aus Mikrobläschen ausgebildet ist.

## Revendications

1. Dispositif pour nettoyer des eaux et/ou des eaux usées industrielles comprenant des matières surnageantes et/ou des matières appropriées à former des suspensions, qui comprend un récipient collecteur, un récipient de flottation, un récipient collecteur de l'écume, un récipient pour produire des mixtes de flottation, respectivement une conduite de décharge de l'écume et une conduite de décharge de l'eau, characterisé en ce que le récipient collecteur comprend un récipient mélangeur (1) et un récipient de floculation (2), le fond du récipient de floculation (2), qui de préférence est cylindrique, étant entouré en forme d'anneau par le récipient mélangeur (1), un coté du récipient mélangeur en forme d'anneau (1) étant fermé, la conduite d'entrée (11) des eaux usées et la conduite d'entrée (13) des substances chimiques y étant raccordées, tandis que l'autre coté du récipient mélangeur (1) en direction du récipient de floculation (2) étant ouvert au fond, auquel, de préférence à son centre, une conduite (24) alimentant les mixtes de flottation et des substances chimiques est raccordée, le récipient de floculation (2) étant entouré par le récipient de flottation (3), puis le récipient d'absorption d'air (5) entourant le récipient de flottation (3), et à l'une des entrées de ce récipient d'absorption d'air (5) étant raccordée une conduite (17) pour produire les mixtes de flottation avec du brouillard d'eau qui est pulvérisé à haute pression, et pour transporter l'air comprimé; au récipient de flottation (3) étant raccordée une conduite (33) pour transporter les mixtes de flottation, tandis que au fond du récipient de flottation (3) étant raccordée une autre conduite de décharge (26) pour la phase de l'eau nettoyé, une partie de laquelle par une pompe à haute pression (6) et une autre conduite (54) dans un récipient d'absorption d'air (5) étant canalisée aux pulvérisateurs (61) qui sont disposés dans la partie supérieure du récipient d'absorption d'air (5) et le récipient de flottation (3) et le récipient d'absorption d'air (5) étant entourés par le récipient collecteur de l'écume (4), à laquelle la conduite de décharge de l'écume (41), l'unité des contrôls de la concentration de l'écume (43) et la conduite de décharge de l'eau sont raccordées.

2. Dispositif pour éliminer de l'encre d'imprimerie de préférence d'une feuille, comprenant un récipient collecteur, un récipient de flottation, un récipient collecteur de l'écume, un récipient avec de l'air comprimé, respectivement une conduite de décharge de l'écume et une conduite de décharge de l'eau, caractérisé en ce que le récipient collecteur comprend un récipient mélangeur (1) et un récipient de floculation (2), le fond du récipient de floculation, qui de préférence est cylindrique, étant entouré en forme d'anneau du récipient mélangeur (1), un coté du récipient mélangeur en forme d'anneau étant fermé, la conduite d'entrée de l'eau usée (11) et la conduite d'entrée des substances chimiques (13) y étant raccordées, tandis que l'autre coté du récipient mélangeur (1) en direction du récipient de floculation (2) étant ouvert, autour du récipient de flottation (3) le récipient d'absorption d'air (5) étant disposé, au récipient d'absorption d'air (5) étant raccordée une conduite (17) alimentant de l'air comprimé, un bout de la conduite (33) pour l'alimentation des mixtes de flottation au récipient de flottation (3) étant aussi joint au récipient d'absorption de l'air (5), tandis que son autre bout étant raccordé au récipient de flottation (3), autour du récipient de flottation (3) étant formé un récipient collecteur de l'écume (4), auquel la conduite de décharge de l'écume (41), l'unité du contrôl de la concentration de l'écume (43), et la conduite de décharge de l'eau sont raccordées.

3. Dispositif selon l'une des revendications 1 ou 2, caractérisé en ce qu'une conduite (11) pour alimenter de l'eau usée et une conduite (13) alimentant les substances chimiques sont raccordées tangentiellement au coté fermé du récipient mélangeur (1) et à la paroi latérale du récipient mélangeur (1) en forme d'anneau des élements mélangeurs (12) sont fixés.

4. Dispositif selon la revendication 3, caractérisé en ce que les élements mélangeurs (12) sont arrangés radialement.

5. Dispositif selon la revendication 3, caractérisé en ce que les élements mélangeurs (12) et le rayon forment un angle.

6. Dispositif selon la revendication 3, caractérisé en ce que les élements mélangeurs (12), à la position où ils sont fixés, sont formés d'une dimension diminuée en coup transversal.

7. Dispositif selon la revendication 3, caractérisé en ce que les élements mélangeurs (12) peuvent être chauffés.

8. Dispositif selon l'une des revendications 1 à 7, caractérisé en ce que la hauteur du récipient de floculation (2) peut être varié.

9. Dispositif selon l'une des revendications 1 à 8, caractérisé en ce qu'au-dessus du récipient de floculation (2) à un niveau, qui peut être changée, est arrangée une tôle en forme de cône à guider l'écume en direction du récipient de floculation (2).

10. Dispositif selon la revendication 9, caractérisé en ce que la plaque de guidage de l'écume (22) peut être tournée.

11. Dispositif selon l'une des revendications 1 à 10, caractérisé en ce que dans le récipient de flottation (3), de préférence au tiers plus basse, au moins deux anneaux (32a, 32b) ayant des alésages sont arrangés l'un au-dessus de l'autre et les anneaux (32a, 32b) sont raccordés à la conduite (33) à haute pression par une des vannes (31a, 31b) .

12. Dispositif selon la revendication 11, caractérisé en ce que les anneaux (32a, 32b, 32c) sont d'un diamètre différent.

13. Dispositif selon la revendication 12, caractérisé en ce que les anneaux (32a, 32b, 32c) sont d'un diamètre uniforme.

14. Dispositif selon l'une des revendications 1 à 13, caractérisé en ce que le diamètre des alésages dans les anneaux (32a, 32b, 32c) augmente avec l'augmentation de la distance du joint de la conduite d'haute pression (33).

15. Dispositif selon l'une des revendications 1 à 14, caractérisé en ce que les anneaux (32a, 32b, 32c) sont arrangés perpendiculairement par rapport à l'arbre (21) du dispositif.

16. Dispositif selon l'une des revendications 1 à 15, caractérisé en ce que les alésages dans les anneaux (32a, 32b, 32c) sont arrangés à un niveau variable par rapport à l'hauteur du dispositif et sont arrangés avec une distance variable entre eux.

17. Dispositif selon l'une des revendications 1 à 16, caractérisé en ce que sur tout le diamètre du récipient de flottation est formée une couche de bulles microscopiques.
